# EUROPÄISCHE PATENTSCHRIFT

(11) **EP 1 089 898 B1**
(45) Veröffentlichungstag und Bekanntmachung des Hinweises auf die Patenterteilung: **06.02.2002**
(21) Anmeldenummer: 99911603.1
(22) Anmeldetag: 19.02.1999
(51) Int. Cl.: B60R 21/32

(54) **VERFAHREN ZUM ERMITTELN EINER ZU EINEM ÜBERROLLVORGANG FÜHRENDEN KRITISCHEN WINKELLAGE EINES FAHRZEUGS**
PROCESS FOR DETERMINING A CRITICAL ANGULAR POSITION OF A VEHICLE LEADING TO ROLL-OVER
PROCEDE POUR DETERMINER LA POSITION ANGULAIRE CRITIQUE D'UN VEHICULE, INDUISANT UN PROCESSUS DE RETOURNEMENT

(30) Priorität: 25.06.1998 DE 19828338
(43) Veröffentlichungstag der Anmeldung: 11.04.2001
(73) Patentinhaber: ROBERT BOSCH GMBH, 70442 Stuttgart (DE)
(72) Erfinder: MATTES, Bernhard, D-74343 Sachsenheim (DE); BREUNIG, Volker, D-74078 Heilbronn-Neckargartach (DE); GROESCH, Lothar, D-70374 Stuttgart (DE)
(86) Internationale Anmeldenummer: DE9900453
(87) Internationale Veröffentlichungsnummer: WO9967111

(56) Entgegenhaltungen:
- EP-A- 0 331 131
- EP-A- 0 498 312
- WO-A-97/49578
- DE-A- 19 609 717

## Beschreibung

### Stand der Technik

Die vorliegende Erfindung betrifft ein Verfahren zum Ermitteln einer zu einem Überrollvorgang führenden kritischen Winkellager eines Fahrzeugs, wobei ein oder mehrere Drehratensensoren die Drehrate des Fahrzeugs um seine Längsachse und/oder Querachse messen und dann durch Integration der gemessenen Drehrate der Wankwinkel um die Fahrzeuglängsachse und/oder der Nickwinkel um die Fahrzeugquerachse bestimmt wird, um daraus durch Schwellenwertentscheidung eine kritische Winkellage erkenner zu können.

In der nicht vorveröffentlichten deutschen Patentanmeldung 196 09 717.1 ist ein derartiges Verfahren beschrieben. Falls es zu einem Überschlag eines Fahrzeugs kommt, müssen im Fahrzeug installierte Schutzeinrichtungen rechtzeitig ausgelöst werden, dazu gehören z.B. Überrollbügel, Gurtstraffer und verschiedene Airbags. Damit all diese Schutzeinrichtungen rechtzeitig ausgelöst werden können, muß möglichst früh erkannt werden, ob Drehungen des Fahrzeugs um seine Längsachse und seine Querachse zu einem Überrollen führen. Fehlentscheidungen eines Überrollvorganges müssen soweit wie möglich ausgeschlossen werden. Zu Fehlentscheidungen kommt es, wenn aus der Integration der Drehrate ein Wank- oder Nickwinkel hervorgeht, der der tatsächlichen Winkellage des Fahrzeugs nicht entspricht. Dadurch, daß Drehratensensoren im allgemeinen einen Offset aufweisen, kommt es unwillkürlich zu einem Fehler bei der Berechnung der Winkellage des Fahrzeugs.

Der Erfindung liegt daher die Aufgabe zugrunde, ein Verfahren anzugeben, mit dem ein durch einen Offset bei der Drehratenmessung entstehender Fehler möglichst weitgehend unterdrückt wird.

### Vorteile der Erfindung

Gemäß den Merkmalen des Anspruchs 1 wird die genannte Aufgabe dadurch gelöst, daß die jeweilige Drehrate nur dann der Integration unterzogen wird, wenn sie eine untere Drehratenschwelle überschreitet und außerdem unterhalb einer oberen Drehratenschwelle liegt, wobei die Schwellen in Abhängigkeit von dem Offsetfehler des jeweiligen Drehratensensors vorgegeben werden. Die Integration der Drehrate wird nach einer vorgebbaren Reset-Zeit abgebrochen und neu gestartet. Dadurch wird ausgeschlossen, daß durch ständig laufende Integration Winkel entstehen, die einen von der tatsächlichen Winkellage sehr stark abweichenden hohen Wert aufweisen, der als ein in der Realität nicht zutreffender Überrollvorgang interpretiert wird.

Gemäß Unteransprüchen ist es zweckmäßig, die Reset-Zeit in Abhängigkeit von der Größe des aus der Integration hervorgehenden Wank- oder Nickwinkels und/oder in Abhängigkeit von der Größe des Sensorfehlers zu bestimmen.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Funktionsdiagramm zum Ermitteln einer zu einem Überrollvorgang führenden kritischen Winkellage eines Fahrzeugs,
Figur 2 zeitliche Verläufe einer Drehrate und eines Wankwinkels.

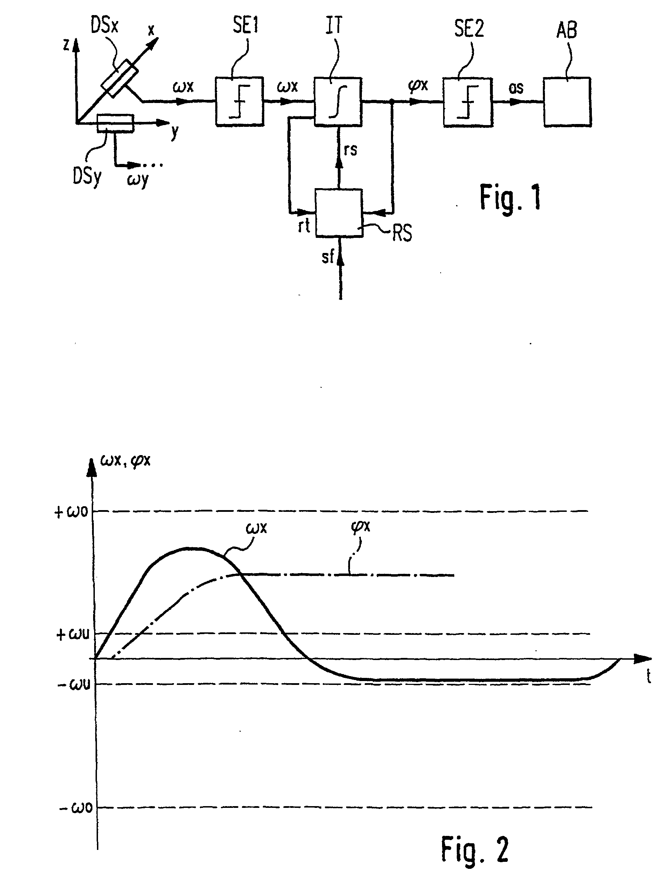

In der Figur 1 ist ein fahrzeugeigenes Koordinatensystem wiedergegeben, das die Längsachse x, die Querachse y und die Hochachse z des Fahrzeugs zeigt. Im Fahrzeug sind ein Drehratensensor DSx, der die Drehrate des Fahrzeugs um seine Längsachse x mißt und ein Drehratensensor DSy, der die Drehrate des Fahrzeugs um seine Querachse y mißt, angeordnet. In den nachfolgenden Funktionsblöcken wird beispielsweise die Drehrate ωx verarbeitet, welche die am häufigsten zu Überrollvorgängen führende Drehrate, nämlich die Drehrate um die Längsachse des Fahrzeugs ist. Die Drehrate ωy um die Querachse y des Fahrzeugs wird in gleicher Weise wie die Drehrate ωx ausgewertet.

In der Figur 2 ist ein zeitlicher Verlauf der Drehrate ωx dargestellt. Bekanntlich weist ein Drehratensensor einen Offsetfehler auf; das heißt, er zeigt eine gemessene Drehrate an, auch wenn tatsächlich gar keine Drehung des Fahrzeugs vorliegt. Um diesen Offsetfehler zu unterdrücken, werden sowohl für die positive Drehrichtung eine untere Schwelle +ωu und eine obere Schwelle +ωo als auch für die negative Drehrichtung eine untere Schwelle -ωu und eine obere Schwelle -ωo vorgegeben. Diese Schwellen werden empirisch nach dem jeweiligen Offsetfehler des betreffenden Drehratensensors ermittelt. In dem Schwellenwertentscheider SE1 werden nun von den gemessenen Drehraten ωx nur diejenigen Drehraten durchgelassen, die oberhalb der unteren Schwelle +ωu, -ωu und unterhalb der oberen Schwelle +ωo, -ωo liegen. Das heißt, es werden nur solche gemessenen Drehraten ωx einer Integration IT zugeführt, die zwischen den Schwellen +ωu und +ωo bzw. zwischen den Schwellen -ωu und -ωo liegen. Wegen der Unterdrückung von Drehraten unterhalb der unteren Schwelle +ωu, -ωu und oberhalb der oberen Schwelle +ωo, -ωo werden in dem aus der anschließenden Integration IT der Drehrate ωx hervorgehenden Wankwinkel ϕx keine Winkelanteile auftreten, die auf den Offset des Drehratensensors DSx zurückzuführen sind.

Durch die Ausblendung der Integration durch die Schwellen +ωu, -ωu und +ωo, -ωo kann es aber zu folgendem Fehler beim berechneten Lagewinkel kommen. In der Figur 2 ist der zeitliche Verlauf der Drehrate ωx von einem Fahrzeug dargestellt, das zunächst eine sehr schnelle Drehbewegung um seine Längsachse in positiver Richtung vollzieht und anschließend eine sehr langsame Drehung zurück in negativer Richtung erfährt. Dadurch steigt die Drehrate ωx zunächst sehr stark an, überschreitet dabei auch die untere Schwelle +ωu, fällt danach wieder ab bis in den negativen Bereich hinein, überschreitet aber nicht die untere Schwelle -ωu, weil die Rückdrehung mit einer sehr geringen Drehrate erfolgt. Eine solche Situation kann z.B. bei unterschiedlich starken Fahrbahnneigungen auftreten. Am Beispiel des Nickwinkels um die Fahrzeugquerachse tritt eine ähnliche Situation auf, wenn z.B. ein Fahrzeug mit hoher Geschwindigkeit einen Berg hinunterfährt und anschließend mit geringer Geschwindigkeit wieder bergauf fährt. Da also ein Teil der gemessenen Drehrate ωx die untere Schwelle-ωu nicht überschreitet, trägt dieser Anteil der Drehrate auch nicht zu dem aus der Integration IT hervorgehenden Winkel ϕx bei. Der Winkel ϕx behält also denjenigen Wert bei, der sich bei der Integration der Drehrate ωx bis zum Unterschreiten der unteren Schwelle +ωu ergibt. Letztendlich hat dadurch der Winkel ϕx einen viel zu hohen Wert. Kommt es nun zu weiteren Drehungen des Fahrzeugs, so kann dieser zu hohe Wert des Winkels ϕx noch weiter erhöht werden und sehr schnell in einen Bereich kommen, bei dem die Schaltung auf ein Überrollen des Fahrzeugs entscheidet und damit Sicherheitseinrichtungen auslöst, obwohl es gar nicht zu einem Überschlag des Fahrzeugs kommt.

Damit nun bei der Offset-Unterdrückung ein geschildeter Winkelfehler möglichst weitgehend unterdrückt wird, wird folgende Maßnahme ergriffen: Es ist ein Reset-Schaltblock RS vorgesehen, der ein Reset-Signal rs an den Integrator IT abgibt, wodurch die Integration der Drehrate ωx abgebrochen und neu gestartet wird. Das bedeutet, daß der zum Zeitpunkt des Resets erreichte Winkel ϕx auf einen Anfangswinkel zurückgesetzt wird, der entweder 0 beträgt oder einem anderen kleinen vorgebbaren Wert entspricht. Der Reset-Schaltblock RS erhält vom Integrator IT ein Startsignal rt, wenn die Drehrate die untere Schwelle +ωu, -ωu überschreitet und damit seine Integration beginnt. Ab Erscheinen des Startsignals rt läuft ein Zähler für eine Reset-Zeit, nach der das Reset-Signal rs an den Integrator IT abgegeben wird. Die Reset-Zeit kann in Abhängigkeit von der Größe des aus der Integration hervorgehenden Winkels ϕx eingestellt werden. Deshalb wird dem Reset-Schaltblock RS der Winkel ϕx zugeführt. Außerdem kann die Reset-Zeit vom Sensorfehler abhängig gemacht werden.

Der dem Reset-Schaltblock RS zugeführte Sensorfehler sf setzt sich aus empirisch ermittelten Fehlern des Drehratensensors zusammen. Solche Fehler sind z.B. Offsetfehler oder Linearitätsfehler etc.. Auch kann die Reset-Zeit vom Fahrzeugtyp abhängig gemacht werden, da es Fahrzeuge gibt, die bereits bei einem geringeren Nick- oder Wankwinkel überrollen als andere Fahrzeuge.

Durch den Resetvorgang der Integration IT besteht also nicht die Gefahr, daß der Winkel ϕx durch Fahrzeugbewegungen, die niemals zu einem Überrollen führen würden, auf einen so großen Wert ansteigt, der bei einer Schwellenwertentscheidung SE2 als ein Überrollen des Fahrzeugs eingeschätzt wird. Der Schwellenwertentscheider SE2 gibt ein Auslösesignal as an die Sicherheitseinrichtungen AB des Fahrzeugs ab, wenn der Winkel ϕx eine vorgegebene kritische Schwelle überschreitet.

## Patentansprüche

1. Verfahren zum Ermitteln einer zu einem Überrollvorgang führenden kritischen Winkellage eines Fahrzeugs, wobei ein oder mehrere Drehratensensoren (DSx, DSy) die Drehrate (ωx, ωy) des Fahrzeugs um seine Längsachse (x) und/oder Querachse (y) messen und dann durch Integration (IT) der gemessenen Drehrate (ωx) der Wankwinkel (ϕx) um die Fahrzeuglängsachse (x) und/oder der Nickwinkel um die Fahrzeugquerachse (y) bestimmt wird, um daraus durch Schwellwertentscheidung (SE2) eine kritische Winkellage erkennen zu können, **dadurch gekennzeichnet, daß** die jeweilige Drehrate (ωx) nur dann der Integration (IT) unterzogen wird, wenn sie eine untere Drehratenschwelle (+ωu, -ωu) überschreitet und unterhalb einer oberen Drehratenschwelle (+ωo, -ωo) liegt, wobei die Schwellen (+ωu, -ωu, +ωo, -ωo) in Abhängigkeit von einem Offsetfehler des jeweiligen Drehratensensors (DSx, DSy) vorgegeben werden, und daß die Integration (IT) der Drehrate (ωx) nach einer vorgebbaren Reset-Zeit abgebrochen und neu gestartet wird.

2. Verfahren nach Anspruch 1, **dadurch gekennzeichnet, daß** die Reset-Zeit in Abhängigkeit von der Größe des aus der Integration (IT) hervorgehenden Wank- (ϕx) oder Nickwinkels (ϕy) bestimmt wird.

3. Verfahren nach Anspruch 1, **dadurch gekennzeichnet, daß** die Reset-Zeit in Abhängigkeit von der Größe des Sensorfehlers (sf) bestimmt wird.

## Claims

1. Method for determining a critical angular position of a vehicle leading to a rolling-over operation, one or more rotational speed sensors (DSx,DSy) measuring the rotational speed (ωx,ωy) of the vehicle about its longitudinal axis (x) and/or transverse axis (y) and then the rolling angle (ϕx) about the longitudinal axis (x) of the vehicle and/or the pitching angle about the transverse axis (y) of the vehicle being determined, by integration (IT) of the rotational speed (ωx) measured, in order to be able to detect a critical angular position from them by means of a threshold value decision (SE2), **characterized in that** the respective rotational speed (ωx) is subjected to integration (IT) only if it exceeds a lower rotational speed threshold (+ωu,-ωu) and lies below an upper rotational speed threshold (+ωo,-ωo), the thresholds (+ωu,-ωu,+ωo,-ωo) being predefined as a function of an offset error of the respective rotational speed sensor (DSx,DSy), and **in that** the integration (IT) of the rotational speed (ωx) is aborted after a predefineable reset time and restarted.

2. Method according to Claim 1, **characterized in that** the reset time is determined as a function of the magnitude of the rolling angle (ϕx) or pitching angle (ϕy) which is obtained from the integration (IT).

3. Method according to Claim 1, **characterized in that** the reset time is determined as a function of the magnitude of the sensor error (sf).

## Revendications

1. Procédé pour déterminer une position angulaire critique d'un véhicule conduisant à un processus de retournement,
selon lequel un ou plusieurs capteurs de vitesse de rotation (DSx, DSy) mesurent les vitesses de rotation (ωx, ωy) du véhicule autour de son axe longitudinal (x) et/ou de son axe transversal (y) et, par intégration (IT) des vitesses mesurées (ωx), on détermine l'angle de basculement (ϕx) autour de l'axe longitudinal du véhicule (x) et/ou l'angle de tangage autour de l'axe transversal (y) du véhicule pour qu'avec une décision à seuil (SE2) on puisse reconnaître une position angulaire critique,
**caractérisé en ce que**
la vitesse de rotation respective (ωx) n'est soumise à l'intégration (IT) que si elle dépasse un seuil de vitesse de rotation inférieur (+ωu, -ωu) et se trouve en dessous d'un seuil de vitesse de rotation supérieur (+ωₒ,-ωo), les seuils (+ωu, -ωu, +ωo, -ωo) étant prédéterminés en fonction d'une erreur de décalage du capteur de vitesse de rotation respectif (DSx, DSy) et
l'intégration (IT) de la vitesse de rotation (ωx) est arrêtée après un temps de remise à l'état initial, prédéterminé, pour être redémarrée.

2. Procédé selon la revendication 1,
**caractérisé en ce que**
le temps de remise à l'état initial est déterminé en fonction de la grandeur de l'angle de basculement (ϕx) ou de tangage (ϕy) résultant de l'intégration (IT).

3. Procédé selon la revendication 1,
**caractérisé en ce que**
le temps de remise à l'état initial est défini en fonction de la grandeur de l'erreur de capteur (sf).
